# EUROPÄISCHE PATENTSCHRIFT

(11) **EP 1 002 224 B1**
(45) Veröffentlichungstag und Bekanntmachung des Hinweises auf die Patenterteilung: **31.03.2004**
(21) Anmeldenummer: 97937550.8
(22) Anmeldetag: 04.08.1997
(51) Int. Cl.: G01N 21/05

(54) **KÜVETTENANORDNUNG**
BOWL SYSTEM
DISPOSITIF A CUVETTE

(43) Veröffentlichungstag der Anmeldung: 24.05.2000
(73) Patentinhaber: BRAN + LUEBBE GmbH, 22844 Norderstedt (DE)
(72) Erfinder: SOMMER, Detlef, D-22889 Ahrensburg (DE); NEHRING, Eckhard, D-24629 Kisdorf (DE); BÜTTNER, Gerd, D-24558 Henstedt-Ulzburg (DE)
(74) Vertreter: Lang, Friedrich
(86) Internationale Anmeldenummer: PCT/EP1997/004234
(87) Internationale Veröffentlichungsnummer: WO 1999/008094

(56) Entgegenhaltungen:
- EP-A- 0 369 310
- EP-A- 0 710 836
- DE-A- 2 846 740
- US-A- 3 973 752
- US-A- 4 192 614
- US-A- 5 442 437

## Beschreibung

Die Erfindung betrifft eine Küvettenanordnung zur kontinuierlichen Überwachung von Fluiden, insbesondere in industriellen Prozessen, vorzugsweise mittels NIR-Spektroskopie, mit einer in einem Baugruppenträger angeordneten Küvette, die eine Probenkammer mit einer Einlaß- und einer Auslaßöffnung sowie einen auf ein Fenster der Probenkammer gerichteten Strahlengang aufweist.

Eine derartige Küvettenanordnung ist beispielsweise aus der europäischen Schrift EP-B1-0 476 088 der Anmelderin oder aus der europäischen Schrift EP-A2-0 710 836 bekannt.

Solche Küvettenanordnung werden zur Online-Überwachung von fließenden Proben eingesetzt, um den Betrieb von Anlagen zu überwachen. Zu diesem Zweck wird die Probe durch eine Probenkammer mit einem bestimmten Durchflußspalt geleitet, der von zwei von einander beabstandeten Scheiben gebildet wird. Von einer Seite ist ein Strahl einer Lichtquelle auf die Probe gerichtet und auf der anderen Seite wird der Strahl nach seinem Durchtritt durch die Probe auf einen Empfänger geleitet. Aus der Extinktion bestimmter Wellenlängen kann auf die Zusammensetzung der Probe zurückgeschlossen werden.

Bei anderen Anordnungen kann statt der zweiten Scheibe auch eine reflektierende Oberfläche eingesetzt werden, so daß aus der spektralen Zusammensetzung des zurückgeworfenen NIR-(Nah-Infra-Rot-)Spektrums auf die Zusammensetzung der Probe geschlossen werden kann.

Damit reproduzierbare Meßergebnisse erzielt werden können, ist es sehr wichtig, daß der optische Aufbau der Anordnung nicht verstellt wird. Außerdem hat der Abstand der Scheiben, d.h. der Durchflußspalt bzw. die Schichtdicke der Probe einen wesentlichen Einfluß auf das Meßergebnis. Auch diese Schichtdicke muß reproduzierbar eingestellt werden können. Schließlich gilt es zu verhindern, daß sich auf dem Meßfenster Beläge bilden, die ebenfalls zu Verfälschungen des Meßergebnisses führen.

Es ist deshalb wichtig, derartige Anordnungen sorgfältig zu warten und bei Bedarf zu reinigen.

Darüber hinaus muß die Anordnung auch den Temperaturen und Drücken widerstehen können, wie sie im rauhen industriellen Betrieb bei der Herstellung der Produkte herrschen, die mittels der Anordnung Online, also kontinuierlich, analysiert werden sollen.

Es kommt auch vor, daß unterschiedliche Produkte in der Anlage produziert werden, zu der die Meßanordnung gehört. In solchen Fällen, ist es notwendig, daß auch die Schichtdicke dem zu analysieren Medium angepaßt werden kann.

Darüber hinaus ist es erforderlich, auch Referenzproben mit der Anordnung zu vermessen, um die Signalverarbeitungskette zu kalibrieren.

Bei einem Instrument für den Laborbetrieb ist, wie in einem Produktblatt der Anmelderin unter dem Produktnamen "InfaPrime Lab" beschrieben, ein Baugruppenträger in einem Gehäuse vorgesehen, bei dem eine genormte Glasküvette aus dem Träger entfernt und durch eine andere Normküvette mit anderer Schichtdicke ersetzt werden kann. Dadurch ist es möglich, die Küvette durch eine ähnlich geartete Küvette, die jedoch für anderen Medien vorgesehen ist, zu ersetzen.

Im Träger ist deshalb die Öffnung für die Küvette größer vorgesehen, als sie für die meisten Küvetten notwendig wäre. Der dadurch bei kleineren Abmessungen entstehende Spalt zum Träger wird durch ein Adapterstück oder einen Abstandhalter überbrückt.

Als nachteilig an dieser Anordnung wird empfunden, daß lediglich genormte Laborküvetten einsetzbar sind. Außerdem müssen die Leitungen vor dem Austausch der Küvette aufwendig getrennt werden. Das Gehäuse liegt lose auf dem Tisch. Sowohl die Küvette, als auch die Zuleitungen sind für den industriellen Einsatz nicht geeignet. Das zu analysierende Medium muß durch entsprechende Pumpen, meist sind es Schlauchpumpen, unter niedrigem Druck zugeführt werden.

Den industriellen Bedingungen wird dagegen die Anordnung gemäß der europäischen Schrift EP-B1-0 476 088 gerecht. Eine solche Anordnung wird in der Anlage fest verrohrt. Allerdings muß sie zur Wartung sehr aufwendig demontiert werden und nach ihrer Wartung wieder sorgfältig justiert und in die Anlage eingebaut werden. Besondere Sorgfalt ist dabei auf die Befestigung der Lichtwellenleiter zu richten, da Änderungen im Strahlengang, wie ausgeführt, zu Verfälschungen des Meßergebnisses führen können.

Aufgabe der Erfindung ist es, eine Anordnung der eingangs genannten Gattung zur Verfügung zu stellen, mit der eine Überwachung unter industriellen Bedingungen bei erleichterter Wartung ermöglicht wird.

Diese Aufgabe wird bei einer gattungsgemäßen Küvettenanordnung durch die Merkmale des kennzeichnenden Teils der Anspruch 1 gelöst.

Das Gehäuse kann mit Vorteil explosionsgeschützt ausgebildet sein, so daß sich die Küvettenanordnung auch in explosionsgefährdeter Umgebung einsetzen läßt. Zur Wartung bzw. zum Austausch der Küvette sind lediglich die Verbindungen innerhalb des Gehäuses zu lösen und nach Austausch der Küvette wieder zu montieren.

Besonders leicht gestaltet sich der Austausch bzw. die Wartung der Küvette, wenn die Leitungen schnelltrennbar ausgebildet sind.

Erfindungsgemäß wird weiterer Montageaufwand dadurch vermieden, daß die Küvette als Baugruppe aus dem Baugruppenträger entnehmbar ausgebildet ist. Dadurch können nämlich die Verbindungen der Lichtwellenleiter mit dem Baugruppenträger bestehen bleiben. Eine Neujustage der Optik nach Austausch der Küvette entfällt vorteilhaft, da der Baugruppenträger während des Küvettenaustausches mit den Lichtwellenleitern verbunden bleibt.

Konstruktiv reicht es zur schnellen Trennung der Leitung von der Küvette aus, wenn die Leitung aus einem axial verstellbaren und einem feststehenden, vorzugsweise am Gehäuse befestigten, Rohrende gebildet ist, die insbesondere ineinander teleskopisch verschiebbar ausgebildet sind.

Vorteilhaft kann die axiale Verstellung dadurch erfolgen, daß die Leitung als federnde Rohrwendel und/oder als axial federnder Faltenbalg und/oder als federnder Rohrmeander und/oder als Schlauchschlaufe ausgebildet ist.

Zur schnellen axialen Verstellung ist ein Kniehebel vorgesehen.

In alternativer Ausführung kann auch vorgesehen werden, daß zur axialen Verstellung ein Spindel-Mutter-Trieb vorgesehen ist.

In bestimmten Anwendungsfällen, wo aufgrund der zu analysieren Medien eine besonders häufige Wartung erfcrderlich ist, und schon anlagenseitig Preßluft vorhanden ist, kann es vorteilhaft sein, wenn zur axialen Verstellung ein Kolben-Zylinder-Antrieb vorgesehen ist.

Die Maßnahme, daß der Baugruppenträger eine optische Baugruppe für den Anschluß eines Lichtwellenleiters zum Einkoppeln und Auskoppeln für Strahlung, aufweist, ermöglicht eine Vormontage der Ein- und Auskoppeloptik beispielsweise für geänderten Medien. Die optischen Verhältnisse lassen sich durch Austausch der optischen Baugruppe leicht an geänderte Medien oder Meßmethoden, beispielsweise an eine Reflektionsmessung, anpassen.

Mit Vorteil wird das Gehäuse so groß ausgeführt, daß ein Montagewerkzeug im Gehäuse angeordnet ist. Dadurch sind alle für den Austausch und für die Wartung erforderlichen Werkzeuge stets zur Hand. Auch außerhalb geplanter Wartungsintervalle läßt sich so ohne großen Aufwand eine Wartung oder ein Austausch der Küvette durchführen.

Mit Vorteil läßt sich der Baugruppenträger auch so gestalten, daß der Baugruppenträger optische Baugruppen für Anschluß eine Referenzstrahlengangs aufweist. Zur Verbesserung der Meßgenauigkeit erhält ein Referenzstrahl bis auf seinen Weg durch die Probe einen weitgehend gleichen optischen Weg, wie ihn der Meßstrahl aufweist. Damit können Einflüsse der optischen Bauteile auf das Meßergebnis durch Vergleich der Signale vermieden werden.

Da die Probenkammer geführt ausgebildet ist, liegen stets reproduzierbare optische Verhältnisse vor, so daß auch nach der Wartung und Montage eine erneute Kalibrierung mit Vorteil entfallen kann.

Der Austausch gestaltet sich bequemer, wenn in der Anschlußarmatur ein Ventil integriert ist.

Ein Austritt des zu analysierenden Mediums aus der festen Verrohrung in das Gehäuse wird vermieden, wenn das Ventil bei Trennung der Leitung selbsttätig schließend ausgebildet ist.

Beim wechseln des zu analysierenden Mediums können die optischen Verhältnisse für die Messung dadurch optimiert werden, daß der Durchflußspalt der Probenkammer einstellbar ausgebildet ist. In der Meßkammer ist ein Abstandhalter angeordnet, der den Spalt reproduzierbar für den Durchfluß des Mediums einstellt.

In speziellen Fällen ist von Vorteil, daß die Probenkammer thermisch isoliert und/oder temperaturstabilisiert, vorzugsweise mittels einer Tewmperaturregelung, ausgebildet ist. das kann z.B. dadurch erreicht werden, daß die Kontaktflächen zum Baugruppenträger auf ein Minimum reduziert werden, oder die Probenkammer bzw. das gesamte Gehäuse durch eine Regelung auf konstanter Temperatur gehalten wird.

Die Erfindung wird in einer bevorzugten Ausführungsform unter Bezugnahme auf eine Zeichnung beschrieben, wobei weitere vorteilhafte Einzelheiten den Figuren der Zeichnung zu entnehmen sind. Funktionsmäßig gleiche Teile sind dabei mit denselben Bezugszeichen versehen.

Die Figuren der Zeichnung zeigen im einzelnen:
- Figur 1: eine Aufsicht auf die erfindungsgemäße Küvettenanordnung ohne Deckel,

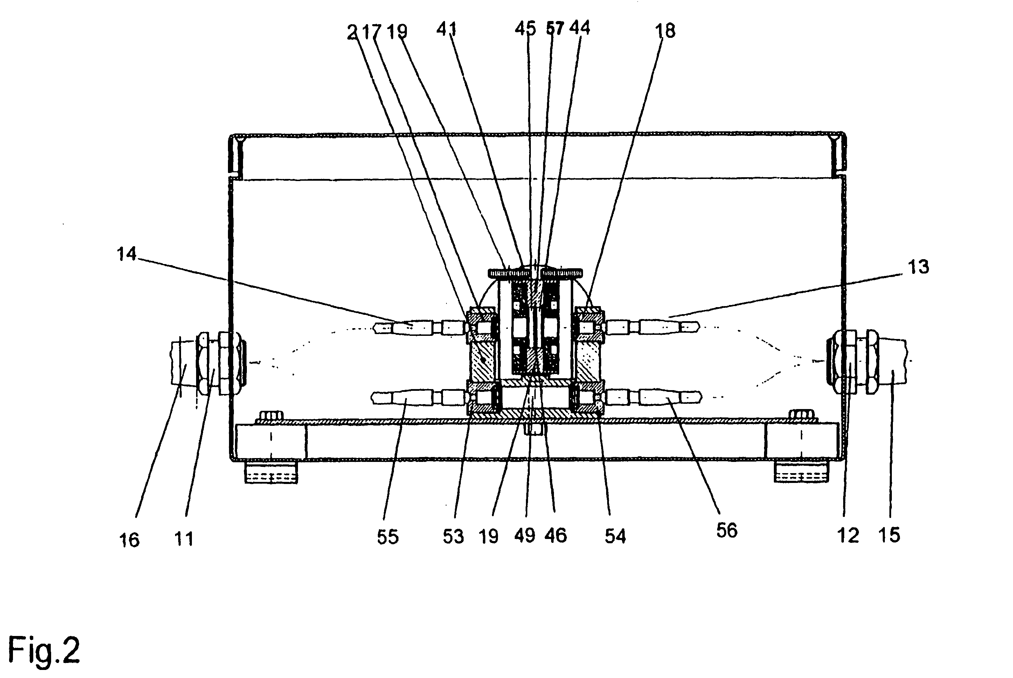

- Figur 2: einen Schnitt durch die erfindungsgemäße Küvettenanordnung gem. Schnittlinie II-II in Figur 1 und
- Figur 3: ein Detail aus Figur 1.

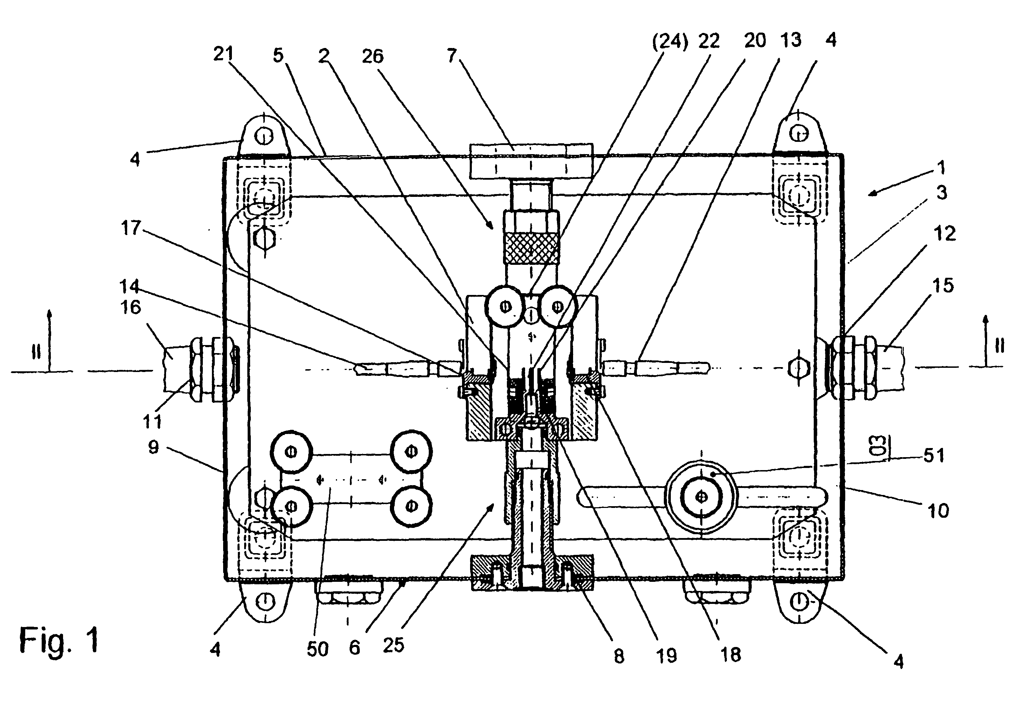

In Figur 1 bezeichnet 1 die erfindungsgemäße Küvettenanordnung. Sie besteht aus einem Baugruppenträger 2, der innerhalb von einem Gehäuse 3 fest montiert ist. Das Gehäuse 3 weist äußere Befestigungslaschen 4 auf, mit denen es in einer Anlage fest montiert wird. Die obere Wand 5 und die unteren Wand 6 wird von der Anschlußarmatur 7 bzw. 8 durchsetzt. Die das zu analysierende Medium führende Rohrleitungen, hier nicht gezeichnet, werden bis zu diesen Armaturen 7,8 herangeführt und fest mit den Armaturen 7,8 verbunden.

Außerdem sind in der linken Wand 9 und rechten Wand 10 Kabelverschraubungen 11 bzw. 12 gezeigt, durch die Lichtwellenleiter 13 und 14 in das Gehäuses geführt sind.

Ein Knickschutz 15,16 an den Kabelverschraubungen 11,12 schont die Lichtwellenleiter, die mittels bekannter Verschraubungen fest mit den optischen Baugruppen 17,18 verschraubt sind. Die optischen Baugruppen 18, 17 sind ihrerseits mit dem Baugruppenträger 2 verschraubt. Lichtwellenleiter 13 führt das Licht an eine Küvette 19 heran.

Die Küvette ihrerseits weist im Inneren ein Einstrahlfenster 20 und ein Auslaßfenster 21 auf, zwischen denen eine Probenkammer 22 gebildet ist. Der aus dem Lichtwellenleiter austretende Strahl durchsetzt die Probenkammer 22. Das austretende Licht wird von der optischen Baugruppe 17 aufgefangen und in den Lichtwellenleiter 14 eingekoppelt, der das Licht zu einem Empfänger leitet, dessen Signal durch eine bekannte Meßkette zu dem gemessenen Spektrum verarbeitet wird.

Für das zu analysierende Medium weist die Probenkammer 22 eine Einlaßöffnung 23 und eine symmetrisch aufgebaute Auslaßöffnung 24 auf, die unterhalb der Mittellinie in der gezeigten Darstellung eines Horizontalschnitts erkennbar ist. Die Verbindung zwischen den Armaturen 7,8 und den Öffnungen 23,24 der Probenkammer 22 wird durch Leitung 25,26 hergestellt.

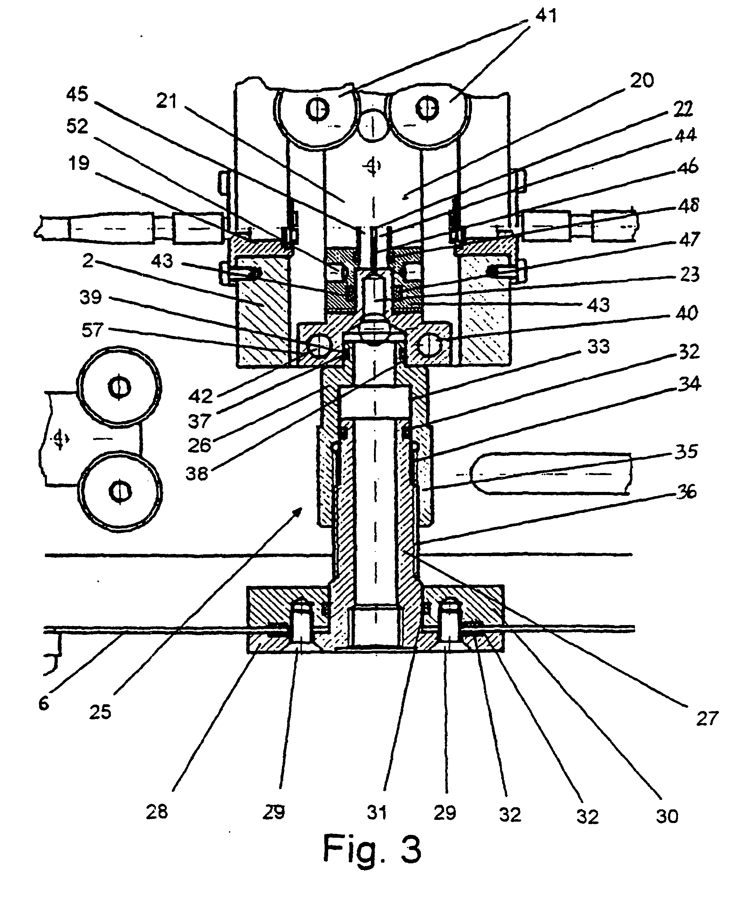

Leitung 25 ist in Figur 3 in vergrößerter Darstellung als Detail gezeigt.

Sie besteht aus einem axial beweglichen Rohrende 26, das auf einem feststehenden Rohrende 27 teleskopartig verstellbar ist.

Das feste Rohrende 27 trägt einen Flansch 28, der mittels Schrauben 29 und Spannring 30 das Rohrende 27 in der Öffnung der unteren Wand eingespannt. Als Dichtungen dienen dabei O-Ring 31, der das Rohrende 27 zum Spannring 30 dichtet und die beiden Ringdichtungen 32, die den Flansch 28 und den Spannring 30 gegen die untere Wand 6 dichten. Das bewegliche Rohrende 26 besitzt eine zylindrischen Bohrung 33 mit der es auf einem daran angepaßter zylindrischen Abschnitt 34 des festen Rohrendes 27 axial verschiebbar ist. Ein O-Ring 32 dichtet dabei den Spalt zwischen dem zylindrischen Abschnitt 34 des festen Rohrendes und der zylindrischen Bohrung 30. Das untere Ende des Rohrendes 26 weist einen Abschnitt mit Bohrung 35 auf, der nach Art einer Mutter auf einem entsprechenden Außengewindeabschnitt 36 des Rohrendes 27 aufgeschraubt ist. Am oberen Ende des Rohrendes 26 ist eine zylindrische Außenfläche 37 angeformt, die in eine angepaßte zylindrische Innenfläche 38 der Küvette 19 eingeführt wird. Der Dichtspalt zwischen diesen Flächen wird durch O-Ring 39 gedichtet. Die zylindrische Innenfläche 38 verbindet die Anschlußarmatur als Leitung mit der Einlaßöffnung 23 der Probenkammer 22.

Wird das Rohrende 26 gedreht, so bewegt es sich. der Steigung des Gewindeabschnitts 31 entsprechend, auch axial. Dabei fährt die Außenfläche 37 aus der zylindrischen Innenfläche 38 heraus und trennt somit die Küvette 19 vom Gehäuse 3.

Die Küvette 19 weist im Bereich ihrer äußern Ecken als Bohrungen ausgeführte Führungsflächen 40 auf, in die entsprechend geformte Führungszapfen 42 des Baugruppenträgers 2 eingreifen. An ihren oberen Enden weisen die Führungszapfen 42 ein Gewinde auf, auf das Muttern 41 aufgeschraubt sind. Die Küvette ist somit mittels der Führungszapfen 42 und Muttern 41 fest mit dem Baugruppenträger 2 verspannt. Nach lösen der Schrauben 41 und zurückschrauben des Rohrendes 26 kann die Küvette 19 entnommen werden und durch eine neue Küvette ersetzt werden.

Die Küvette 19 besteht aus einem Block 57, in dem die Öffnung 23 für den Einlaß und die Öffnung 24 für den Auslaß des Mediums eingebracht sind. Beidseitig der Durchflußöffnungen 23, 24 vorgesehene eingeschraubte ringscheibenförmige Fensterrahmen 43 halten Scheiben 45, die ein Ein- und ein Ausstrahlfenster 20, 21 bilden, wobei zwischen ihnen ein Abstandhalter 46 angeordnet ist. Dichtungen 47 und Dichtung 48 dichten die Scheiben der Probenkammer 22 und des Blocks 57 gegenüber dem Fensterrahmen 43 ab.

Die Kontaktflächen des Blocks 57 zum Baugruppenträger 2sind auf ein Minimum reduziert, damit die Probenkammer soweit wie möglich thermisch von den übrigen Teilen isoliert ist.

Der Innengewindeabschnitt 35 und der entsprechende Außengewindeabschnitt 34, die als Getriebeglied für das axiale Zurückfahren und als Führung dienen, können beispielsweise auch durch Führungsflächen und einen geeigneten Lineartrieb ersetzt werden. Als Lineartrieb kann der Fachmann beispielsweise eine Kolben-Zylinder-Einheit vorsehen oder einen Kniehebel, der nach Art eines Schnellspanners das axial verschiebliche Rohrende 26 bewegt.

Innerhalb des Gehäuses 3 ist eine Ersatzküvette 50 befestigt, gegen die die zu wartende Küvette 19 ausgetauscht werden kann. Außerdem ist im Gehäuse ein Werkzeug 51 vorgesehen, daß mit seinen entsprechend angeordneten Zapfen (nicht sichtbar) geeignet ist, in Bohrungen 52 des Fensterrahmens 43 einzugreifen. Das Werkzeug 51 dient dazu, den Fensterrahmen aus dem Block 42 herauszuschrauben, um die dann entnehmbaren Scheiben 44, 45 zu reinigen.

Im Baugruppenträger sind zusätzlich in einer Bohrung 49 optische Baugruppen 53, 54 für den Anschluß weiterer Lichtwellenleiter 55, 56 vorgesehen, die als Referenzstrahlengang dienen.

Auf diese Weise ist eine Küvettenanordnung geschaffen worden, die wesentlich günstiger zu warten ist und fest innerhalb von industriellen Anlagen so montiert werden kann, daß sie sogar für explosionsgefährdete Betriebsumgebungen geeignet ist.

### Bezugszeichenliste

- 1: Küvettenanordnung
- 2: Baugruppenträger
- 3: Gehäuse
- 4: Befestigungslaschen
- 5: obere Wand
- 6: untere Wand
- 7: Anschlußarmatur für Auslaß
- 8: Anschlußarmatur für Einlaß
- 9: linke Wand
- 10: rechte Wand
- 11: Kabelverschraubung
- 12: Kabelverschraubung
- 13: Lichtwellenleiter
- 14: Lichtwellenleiter
- 15: Knickschutz
- 16: Knickschutz
- 17: optische Baugruppe
- 18: optische Baugruppe
- 19: Küvette
- 20: Einstrahlfenster
- 21: Auslaßfenster
- 22: Probenkammer
- 23: Einlaßöffnung
- 24: Auslaßöffnung
- 25: Leitung
- 26: bewegliches Rohrende
- 27: feststehendes Rohrende
- 28: Flansch
- 29: Schraube
- 30: Spannring
- 31: O-Ring
- 32: Dichtung
- 33: zylindrische Bohrung
- 34: zylindrischer Abschnitt
- 35: Bohrung
- 36: Außengewindeabschnitt
- 37: Außenfläche
- 38: zylindrische Innenfläche
- 39: O-Ring
- 40: Führungsfläche
- 41: Mutter
- 42: Führungszapfen
- 43: Fensterrahmen
- 44: Scheibe
- 45: Scheibe
- 46: Abstandhalter
- 47: Dichtung
- 48: Dichtung
- 49: Bohrung
- 50: Ersatzküvette
- 51: Werkzeug
- 52: Bohrung
- 53: optische Baugruppe
- 54: optische Baugruppe
- 55: Lichtwellenleiter
- 56: Lichtwellenleiter
- 57: Block

## Patentansprüche

1. Küvettenanordnung zur kontinuierlichen Überwachung von Fluiden, insbesondere in industriellen Prozessen, vorzugsweise mittels NIR-Spektroskopie, mit einer in einem Baugruppenträger (2) angeordneten Küvette (19), die eine Probenkammer (22) mit einer Einlaß- (23) und einer Auslaßöffnung (24) sowie einen auf ein Fenster (20) der Probenkammer (22) gerichteten Strahlengang aufweist, **dadurch gekennzeichnet, daß** der Baugruppenträger (2) in einem Gehäuse (3) mit einer das Gehäuse (3) durchsetzenden Anschlußarmatur (7, 8) angeordnet ist, wobei zwischen Anschlußarmatur (7, 8) des Gehäuses (3) und der Einlaß-(23) und Auslaßöffnung (24) der Probenkammer (22) Leitungen (25,26) vorgesehen sind und die Küvette (19) als Baugruppe aus dem Baugruppenträger (2) entnehmbar und dabei geführt ausgebildet ist, wobei der Baugruppenträger (2) im Gehäuse (3) fest montiert ist, und wobei der Baugruppenträger (2) optische Baugruppen (17, 18, 53, 54) für den Anschluß von Lichtwellenleitern (13, 14, 55,56) zum Einkoppeln und Auskoppeln von Strahlung aufweist.

2. Küvettenanordnung nach Anspruch 1, **dadurch gekennzeichnet, daß** die Leitungen (25, 26) mit einem axial verschiebbaren schnelltrennbaren Anschluß zu den Öffnungen (23, 24) der Probenkammer (22) ausgebildet sind.

3. Küvettenanordnung nach Anspruch 1 oder 2, **dadurch gekennzeichnet, daß** die Leitung (25, 26) aus einem axial verstellbaren Rohrende (26) und einem feststehenden, vorzugsweise am Gehäuse (3) befestigten, Rohrende (27) gebildet ist, die insbesondere ineinander teleskopisch verschiebbar ausgebildet sind.

4. Küvettenanordnung nach Anspruch 1, 2 oder 3, **dadurch gekennzeichnet, daß** die Leitung als federnde Rohrwendel und/oder als axial federnder Faltenbalg und/oder als federnder Rohrmeander und/oder als Schlauchschlaufe ausgebildet ist.

5. Küvettenanordnung nach Anspruch 2, 3 oder4 **dadurch gekennzeichnet, daß** zur axialen Verstellung ein Kniehebel vorgesehen ist, und/oder daß zur axialen Verstellung ein Spindel-Mutter-Trieb vorgesehen ist, und/oder daß zur axialen Verstellung ein Kolben-Zylinder-Antrieb vorgesehen ist.

6. Küvettenanordnung nach einem oder mehreren der vorstehenden Ansprüche, **dadurch gekennzeichnet, daß** ein Montagewerkzeug (51) im Gehäuse (3) angeordnet ist.

7. Küvettenanordnung nach einem oder mehreren der vorstehenden Ansprüche, **dadurch gekennzeichnet, daß** der Baugruppenträger (2) optische Baugruppen (53, 54) für Anschluß eines Referenzstrahlengangs aufweist.

8. Küvettenanordnung nach einem oder mehreren der vorstehenden Ansprüche, **dadurch gekennzeichnet, daß** in der Anschlußarmatur oder Leitung (25, 26) ein Ventil integriert ist.

9. Küvettenanordnung nach Anspruch 8, **dadurch gekennzeichnet, daß** das Ventil bei Trennung der Leitung (25, 26) selbsttätig schließend ausgebildet ist.

10. Küvettenanordnung nach einem oder mehreren der vorstehenden Ansprüche, **dadurch gekennzeichnet, daß** die Probenkammer (22) einen Durchflußspalt aufweist, dessen Abstand einstellbar ausgebildet ist.

11. Küvettenanordnung nach einem oder mehreren der vorstehenden Ansprüche, **dadurch gekennzeichnet, daß** die Probenkammer (22) thermisch isoliert und/oder temperaturstabilisiert, vorzugsweise mittels einer Temperaturregelung, ausgebildet ist.

## Claims

1. A vessel system for the continuous monitoring of fluids, in particular in industrial processes, preferably by means of NIR spectroscopy, with a vessel (19) that is disposed in a subassembly support (2) and has a sample chamber (22) with an inlet opening (23) and an outlet opening (24) as well as a beam path directed at a window (20) of the sample chamber (22),
**characterized in that**
the subassembly support (2) is disposed in a housing (3) with a connecting armature (7, 8) that passes through the housing (3), wherein lines (25, 26) are provided between the connecting armature (7, 8) of the housing (3) and the inlet opening (23) and outlet opening (24) of the sample chamber (22), and the vessel (19) can be removed as a subassembly from the subassembly support (2) and is embodied as guided, wherein the subassembly support (2) is rigidly mounted in the housing (3), and wherein the subassembly support (2) has optical subassemblies (17, 18, 53, 54) for the connection of light wave conductors (13, 14, 55, 56) for the coupling and decoupling of radiation.

2. The vessel system according to claim 1,
**characterized in that**
the lines (25, 26) are embodied with an axially movable, rapidly detachable connection to the openings (23, 24) of the sample chamber (22).

3. The vessel system according to claim 1 or 2,
**characterized in that**
the line (25, 26) is comprised of an axially movable pipe end (26) and a stationary pipe end (27), preferably fastened to the housing (3), which are in particular embodied so that they can be moved telescopically inside one another.

4. The vessel system according to claim 1, 2 or 3,
**characterized in that**
the line is embodied as a resilient tubular spiral and/or as an axially resilient bellows and/or as a resilient tubular meander and/or as a hose loop.

5. The vessel system according to claim 2, 3 or 4,
**characterized in that**
a knuckle joint is provided for the axial adjustment and/or a spindle nut drive is provided for the axial adjustment and/or a piston cylinder drive is provided for the axial adjustment.

6. The vessel system according to one or more of the preceding claims,
**characterized in that**
a mounting tool (51) is disposed in the housing (3).

7. The vessel system according to one or more of the preceding claims,
**characterized in that**
the subassembly support (2) has optical subassemblies (53, 54) for the connection of a reference beam path.

8. The vessel system according to one or more of the preceding claims,
**characterized in that**
a valve is integrated into the connecting armature or line (25, 26).

9. The vessel system according to claim 8,
**characterized in that**
the valve is embodied so that it automatically closes when the line (25, 26) is detached.

10. The vessel system according to one or more of the preceding claims,
**characterized in that**
the sample chamber (22) has a through flow gap whose spacing is embodied so that it can be adjusted.

11. The vessel system according to one or more of the preceding claims,
**characterized in that**
the sample chamber (22) is embodied thermally insulated and/or temperature-stabilized, preferably by means of a temperature regulation.

## Revendications

1. Système de cuvette pour la surveillance continue de fluides, en particulier dans des processus industriels, de préférence par spectroscopie PIR (proche infrarouge), avec une cuvette (19) placée dans un support (2) de composants et qui présente une chambre (22) à échantillon avec une ouverture d'entrée (23) et une ouverture de sortie (24) ainsi qu'un trajet de rayon dirigé vers une fenêtre (20) de la chambre (22) à échantillon, ***caractérisé en ce que*** le support (2) de composants est placé dans un boîtier (3) avec un élément de raccordement (7, 8) traversant le boîtier (3), dans lequel des conduites (25, 26) sont prévues entre l'élément de raccordement (7, 8) du boîtier (3) et les ouvertures d'entrée (23) et de sortie (24) de la chambre (22) à échantillon, et la cuvette (19) est réalisée en tant qu'élément amovible depuis le support (2) de composants et guidée pour cela, dans lequel le support (2) de composants est monté fixe dans le boîtier (3), et dans lequel le support (2) de composants présente des composants optiques (17, 18, 53, 54) pour le branchement de conducteurs optiques (13, 14, 55, 56) pour le couplage et le découplage d'un rayonnement.

2. Système de cuvette selon la revendication 1, ***caractérisé en ce que*** les conduites (25, 26) sont réalisées avec un raccord à ouverture rapide mobile axialement, qui mène aux ouvertures (23, 24) de la chambre (22) à échantillon.

3. Système de cuvette selon la revendication 1 ou 2, ***caractérisé en ce que*** la conduite (25, 26) est formée d'une extrémité (26) de tube mobile axialement et d'une extrémité (27) de tube immobile, de préférence fixée au boîtier (3), qui sont en particulier réalisées mobiles l'une dans l'autre de façon télescopique.

4. Système de cuvette selon la revendication 1, 2 ou 3, ***caractérisé en ce que*** la conduite est conformée en serpentin de tube élastique et/ou en soufflet élastique axialement et/ou en méandre de tube élastique et/ou en boucle de tuyau.

5. Système de cuvette selon la revendication 2, 3 ou 4, ***caractérisé en ce qu***'un levier à genouillère est prévu pour le déplacement axial, et/ou ***en ce qu***'un entraînement à broche et écrou est prévu pour le déplacement axial, et/ou ***en ce qu***'un entraînement à piston et cylindre est prévu pour le déplacement axial.

6. Système de cuvette selon l'une ou plusieurs des revendications précédentes, ***caractérisé en ce qu***'un outil de montage (51) est placé dans le boîtier (3).

7. Système de cuvette selon une ou plusieurs des revendications précédentes, ***caractérisé en ce que*** le support (2) de composants présente des composants optiques (53, 54) pour le raccordement d'un trajet de rayon de référence.

8. Système de cuvette selon l'une ou plusieurs des revendications précédentes, ***caractérisé en ce qu***'une vanne est intégrée sur l'élément de raccordement ou la conduite (25, 26).

9. Système de cuvette selon la revendication 8, ***caractérisé en ce que*** la vanne est à fermeture automatique en cas de coupure de la conduite (25, 26).

10. Système de cuvette selon l'une ou plusieurs des revendications précédentes, ***caractérisé en ce que*** la chambre (22) à échantillon présente une fente d'écoulement dont la distance est réalisée réglable.

11. Système de cuvette selon l'une ou plusieurs des revendications précédentes, ***caractérisé en ce que*** la chambre (22) à échantillons est isolée thermiquement et/ou à température stabilisée, de préférence au moyen d'une régulation de température.
